# EUROPEAN PATENT SPECIFICATION

(11) **EP 2 610 156 B1**
(45) Date of publication and mention of the grant of the patent: **21.05.2014**
(21) Application number: 12190475.9
(22) Date of filing: 30.10.2012
(51) Int. Cl.: B62K 11/10, B62K 19/46

(54) **Straddle-type vehicle**
Grätschsitz-Fahrzeug
Véhicule de type à selle

(30) Priority: 28.12.2011 JP 2011289096
(43) Date of publication of application: 03.07.2013
(73) Proprietor: Yamaha Hatsudoki Kabushiki Kaisha, Shizuoka-ken 438-8501 (JP)
(72) Inventor: Sou, Atushi, Shizuoka-ken, 438-8501 (JP)
(74) Representative: Stöckeler, Ferdinand

(56) References cited:
- EP-A1- 1 695 899
- EP-A1- 2 272 740
- JP-A- 2008 149 980

## Description

### TECHNICAL FIELD

The present invention relates to a straddle-type vehicle.

The present application claims priority from Japanese Patent Application No. 2011-289096, filed on December 28, 2012.

### BACKGROUND ART

In a straddle-type vehicle having an engine as a driving power source, dust or the like contained in the air supplied to the engine may cause abrasion of the inside of the engine, consequently leading to a shorter engine life span. For this reason, an air cleaner, which is an apparatus for cleaning air, is generally provided on the upstream side of the intake pipe for supplying air to the engine.

Patent Literature 1 discloses a motorcycle equipped with a power transmission device disposed at the left of the motorcycle, and an air cleaner arranged above the device. An example of the power transmission apparatus is a belt-type continuously variable transmission (hereinafter referred to as a "CVT").

In the motorcycle disclosed in Patent Literature 1, the intake passage for introducing air to the air cleaner extends frontward and obliquely upward from the air cleaner. An intake chamber is fitted to the distal end of the intake passage. The intake chamber has an air inlet port extending rearward and obliquely upward. In order to inhibit dust from being sucked into the air cleaner, the air inlet port is disposed in the space provided below the seat.

### CITATION LIST

### Patent Literature

[Patent Literature 1] JP 2008-149980 A

### SUMMARY OF INVENTION

### TECHNICAL PROBLEM

When a vehicle has a CVT as a power transmission apparatus, it is preferable to supply cooling air to the V-belt of the CVT in order to cool the V-belt. However, when it is attempted to provide the housing case for enclosing the CVT with a similar intake passage to the intake passage connected to the air cleaner in the motorcycle described in Patent Literature 1, the intake passage for the air cleaner and the intake passage for the housing case interfere with each other. For this reason, it is difficult to provide these intake passages at the same time.

Moreover, even when an air inlet port is disposed within the space provided below the seat, dust may not be prevented sufficiently from entering the air cleaner in a dusty area because the air inlet port opens obliquely upward toward the space. As a consequence, the air containing a large amount of dust may be sucked into air cleaner, which increases the risk of clogging of the air cleaner.

The present invention has been accomplished in view of the foregoing and other problems, and it is an object of the invention to provide a straddle-type vehicle that achieves good cleaning performance for the air supplied to the engine by efficiently disposing an intake passage connected to an air cleaner and reducing the amount of dust or the like sucked into the air cleaner.

### SOLUTION TO PROBLEM

The present invention provides a straddle-type vehicle comprising: a body frame having a main frame extending rearward and obliquely downward from a head pipe, left and right seat frames each extending rearward and obliquely upward from the main frame, and a cross member mounted between the left and right seat frames; a storage box having a right side wall positioned to the left of the right seat frame, the storage box being supported between the left and right seat frames by the cross member; an engine unit having a crankcase, a cylinder extending frontward and obliquely upward from the crankcase, a transmission case disposed to the left of the crankcase, and a belt-type continuously variable transmission disposed in the transmission case, the engine unit being supported below the storage box by the body frame; an intake pipe extending rearward from the cylinder and disposed above the cylinder and below the storage box; an air cleaner connected to a rear portion of the intake pipe; and an intake passage extending upward from the air cleaner and having an air inlet port for sucking air. The intake passage is disposed to the right of the vehicle center line. The air inlet port of the intake passage is disposed to the right of the right side wall of the storage box and to the left of the right seat frame. At least a portion of the air inlet port of the intake passage opens toward the right side wall of the storage box.

In the straddle-type vehicle according to the present invention, the transmission case that accommodates belt-type continuously variable transmission (CVT) is disposed at the left of the straddle-type vehicle, and the intake passage extending upward from the air cleaner is disposed to the right of the vehicle center line. For this reason, even if an intake passage for supplying cooling air to the CVT accommodated in the transmission case is provided, the just-mentioned intake passage and the intake passage connected to the air cleaner do not interfere with each other. The air inlet port of the intake passage connected to the air cleaner is disposed in the space between the right of the right side wall of the storage box and the left of the right seat frame, which has in the past been an unutilized space. Therefore, it is not necessary to provide extra space for providing the air inlet port, and it is possible to utilize the existing space effectively. Moreover, water, mud, dust, and the like that are splashed up from the front wheel are unlikely to enter the air inlet port because at least a portion of the air inlet port is disposed so as to face the right side wall of the storage box. Thus, the straddle-type vehicle according to the present invention can effectively prevent the engine performance from degrading because the intake passage connected to the air cleaner is disposed efficiently and the amount of dust or the like sucked into the air cleaner can be reduced.

In one embodiment of the present invention, the straddle-type vehicle further may comprise a passenger footrest supported at a rear portion of only the left seat frame of the right and left seat frames.

Since the intake passage connected to the air cleaner is disposed to the right of the vehicle center line, the passenger footrest can be disposed at the left of the straddle-type vehicle without being interfered by the air cleaner. The passenger footrest can be placed even if it has a large size.

In one embodiment of the present invention, the straddle-type vehicle further comprises an exhaust pipe connected to the cylinder and extending rearward, and a muffler connected to a rear end portion of the exhaust pipe and extending rearward and obliquely upward. The center line of the muffler is positioned to the right of the center line of the intake passage when viewed from the rear of the vehicle.

Since the muffler is offset so as to be positioned at the right of the straddle-type vehicle, the heat of the muffler is inhibited from being transmitted to the air cleaner and the intake passage connected to the air cleaner.

In one embodiment of the present invention, a leftmost end of the muffler is positioned to the right of the center line of the intake passage when viewed from the rear of the vehicle.

This makes it possible to effectively inhibit the heat of the muffler from being transmitted to the air cleaner and the intake passage connected to the air cleaner.

In one embodiment of the present invention, a leftmost end of the muffler is positioned to the right of a rightmost end of the intake passage when viewed from the rear of the vehicle.

This makes it possible to more effectively inhibit the heat of the muffler from being transmitted to the air cleaner and the intake passage connected to the air cleaner.

In one embodiment of the present invention, the right side wall of the storage box has a recessed portion recessed leftward. At least a portion of the air inlet port of the intake passage is disposed within the recessed portion.

The mud, dust, water, and the like that are splashed up by the front wheel does not easily enter the recessed portion. As a result, the mud, dust, water and the like can be prevented from entering the air inlet port provided within the recessed portion.

In one embodiment of the present invention, the right side wall of the storage box has a front side wall, a rear wall extending leftward from the rear end of the front side wall, and a rear side wall extending rearward from a leftmost end of the rear wall. The recessed portion is defined by at least the rear wall and the rear side wall. At least a portion of the air inlet port of the intake passage faces the rear wall.

Thus, since at least a portion of (preferably the entirety of) the air inlet port of the intake passage faces the rear wall of the storage box, the mud, dust, water and the like can be prevented from entering the air inlet port more effectively.

In one embodiment of the present invention, the air inlet port of the intake passage has a first portion that opens frontward and a second portion that opens leftward. The air inlet port is disposed so that a rightmost end of the rear wall is positioned to the right of a rightmost end of the first portion. The first portion faces the rear wall. The second portion faces the rear side wall.

From the viewpoint of ensuring sufficient housing space in the storage box, it is preferable that the recessed portion of the storage box be smaller. Nevertheless, when the recessed portion is small, it is difficult to place the entire air inlet port within the recessed portion. On the other hand, it is necessary to make the air inlet port smaller in order to place the entire air inlet port within the recessed portion when the recessed portion of the storage box is small. In view of this point, the advantageous effects of disposing the air inlet port within the recessed portion can be obtained without making the size of the air inlet port smaller, by disposing the air inlet port so that the rightmost end of the rear wall is positioned to the right of the rightmost end of the first portion and disposing the first portion so as to face the rear wall. That is, both ensuring sufficient housing space of the storage box and preventing the entry of dust into the air cleaner can be achieved at the same time.

In one embodiment of the present invention, the intake passage is formed by a duct being non-contractible and non-expandable.

Thus, the length of the intake passage is invariable, and accordingly, the length of the whole intake passage of the engine (i.e., the intake passage, the passage in the air cleaner, and the intake pipe) is invariable. As a result, fluctuations in the intake pulse can be suppressed, and the performance of the engine is stabilized.

In one embodiment of the present invention, at least a portion of the air inlet port is disposed so as to overlap the right seat frame when viewed from a side of the vehicle.

Thus, mud, dust, water and the like can be prevented from entering the air inlet port by the right seat frame.

In one embodiment of the present invention, the straddle-type vehicle further comprises another intake passage disposed to the left of the vehicle center line and extending upward from the transmission case.

In this way, the other intake passage (an intake passage for supplying cooling air from outside to the CVT in the transmission case) can be provided without interfering with the intake passage connected to the air cleaner.

In one embodiment of the present invention, the storage box has a left side wall positioned to the right of the left seat frame. The left side wall has another recessed portion recessed rightward. The other intake passage has an air inlet port for sucking air. At least a portion of the air inlet port of the other intake passage is disposed within the other recessed portion.

The mud, dust, water, and the like that are splashed up by the front wheel does not easily enter the other recessed portion. As a result, the mud, dust, water and the like can be prevented from entering the air inlet port provided within the other recessed portion (i.e., from entering the transmission case).

In one embodiment of the present invention, at least a portion of the other intake passage is formed by a bellows-shaped duct.

Since the other intake passage is formed by a bellows-shaped duct, it is easy to form a desired path for the intake passage.

In one embodiment of the present invention, the engine unit is swingably supported by the body frame.

In the straddle-type vehicle having such a configuration as well, it is possible to prevent mud and dust from entering the air inlet port.

### ADVANTAGEOUS EFFECTS OF INVENTION

As described above, the present invention makes it possible to provide a straddle-type vehicle having good cleaning performance for the air supplied to an engine by efficiently disposing an intake passage connected to an air cleaner and reducing the amount of dust or the like sucked into the air cleaner.

### BRIEF DESCRIPTION OF DRAWINGS

Fig. 1 is a right side view illustrating a motorcycle according to one embodiment of the present invention;
Fig. 2 is a front view illustrating a rear portion of the motorcycle according to one embodiment of the present invention;
Fig. 3 is a rear view illustrating the rear portion of the motorcycle according to one embodiment of the present invention;
Fig. 4 is a plan view illustrating the rear portion of the motorcycle according to one embodiment of the present invention;
Fig. 5 is a left side view illustrating the rear portion of the motorcycle according to one embodiment of the present invention;
Fig. 6 is a right side view illustrating the rear portion of the motorcycle according to one embodiment of the present invention;
Fig. 7 is a perspective view illustrating an air cleaner and a storage box according to one embodiment of the present invention;
Fig. 8 is an internal cross-sectional view illustrating an engine unit according to one embodiment of the present invention;
Fig. 9 is a plan view illustrating an air cleaner and a rear fender according to one embodiment of the present invention;
Fig. 10 is a left side view illustrating the air cleaner and the rear fender according to one embodiment of the present invention;
Fig. 11 is a right side view illustrating the air cleaner and the rear fender according to one embodiment of the present invention;
Fig. 12 is a horizontal cross-sectional view illustrating the air cleaner according to one embodiment of the present invention;
Fig. 13 is a cross-sectional view taken along line XIII-XIII in Fig. 12; and
Fig. 14 is a horizontal cross-sectional view illustrating an air cleaner according to another embodiment of the present invention.

### DESCRIPTION OF EMBODIMENTS

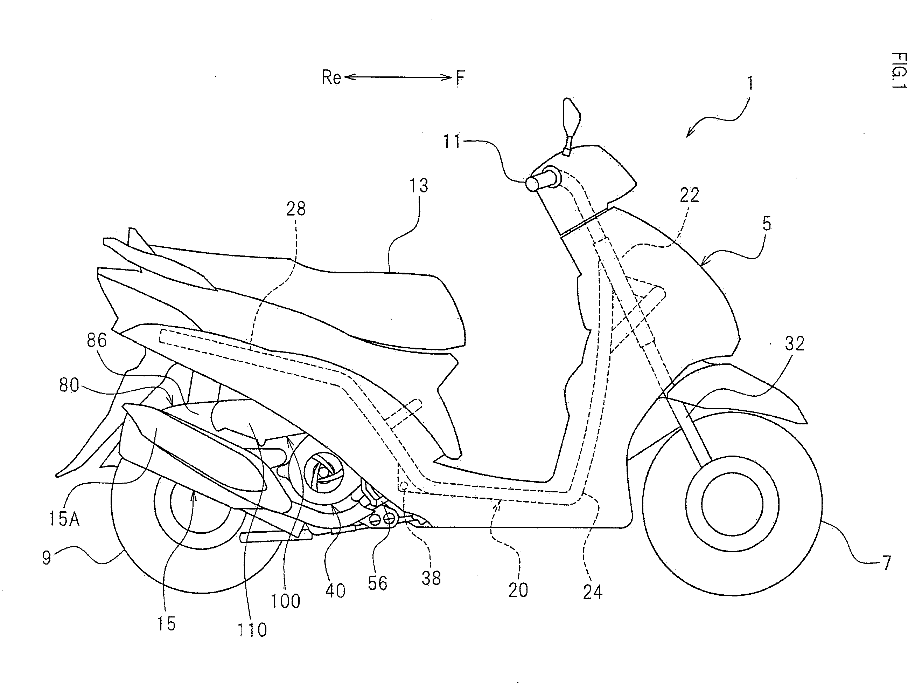

Hereinbelow, embodiments of the present invention will be described. As illustrated in Fig. 1, the straddle-type vehicle according to the present embodiment is a scooter type motorcycle 1. The type of the straddle-type vehicle according to the present invention is, however, not limited to the scooter type motorcycle 1. The straddle-type vehicle according to the present invention may be any other type of motorcycle, such as a moped type motorcycle, an off-road type motorcycle, or an on-road type motorcycle. The straddle-type vehicle according to the present invention is not limited to a motorcycle but may be any other straddle-type vehicle, such as ATV (All Terrain Vehicle). Note that the straddle-type vehicle means a vehicle such that the rider straddles the vehicle when riding.

In the following description, the terms "front," "rear," "left," and "right" respectively refer to front, rear, left, and right as defined based on the perspective of the rider of the motorcycle 1. Reference characters F, Re, L, and R in the drawings indicate front, rear, left, and right, respectively.

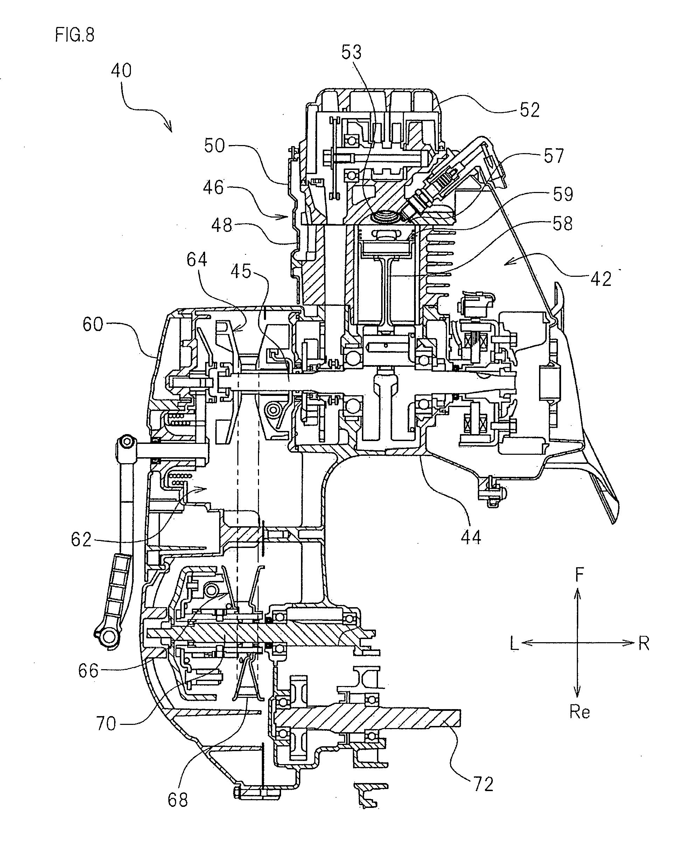

The motorcycle 1 has a vehicle body 5, a front wheel 7, a rear wheel 9, and an engine unit 40 for driving the rear wheel 9. The vehicle body 5 has a handlebar 11, which is operated by the rider, and a seat 13, on which the rider is to be seated. The engine unit 40 is what is called a unit swing type engine unit that has an engine 42 (see Fig. 8). The front end portion of the engine unit 40 is supported by a body frame 20 so that the engine unit can swing about a pivot shaft 38, which is a horizontal axis. That is, the engine unit 40 is supported so as to be swingable relative to the body frame 20.

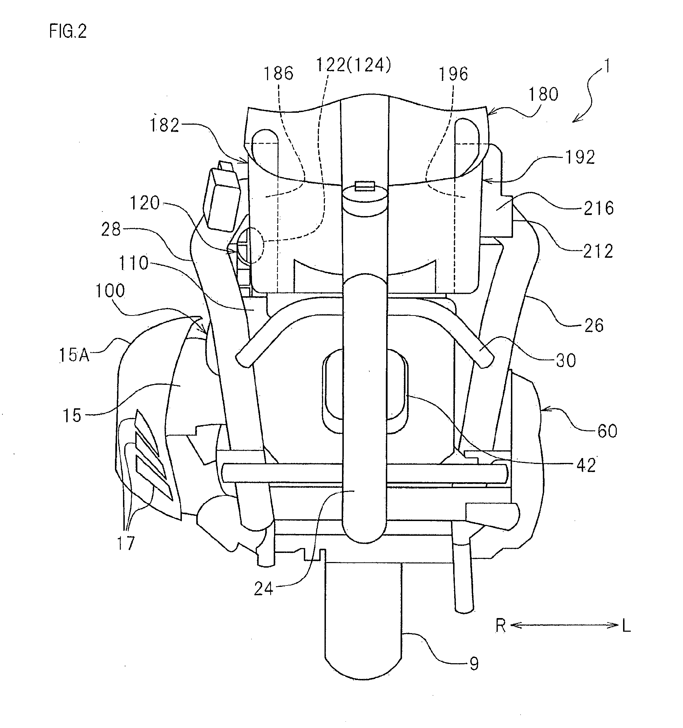

The body frame 20 has a main frame 24 extending rearward and obliquely downward from a head pipe 22, left and right seat frames* 26 (see Fig. 2) and 28 extending rearward and obliquely upward from the main frame 24, and a cross-member 30 (see Fig. 2) provided between the left and right seat frames 26 and 28. A front fork 32 is mounted to the head pipe 22.

A front wheel 7 is supported at a lower end portion of the front fork 32. A rear wheel 9 is supported at a rear end portion of the engine unit 40. A rear fender 80 for covering a portion of the rear wheel 9 is supported on the engine unit 40. The air cleaner 80 can swing relative to the body frame 20, together with the rear wheel 9.

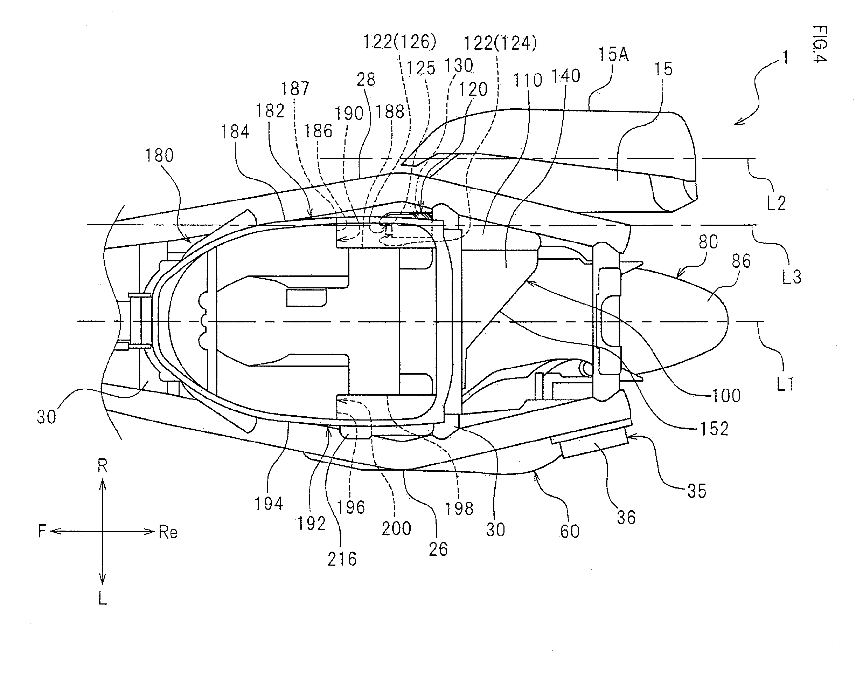

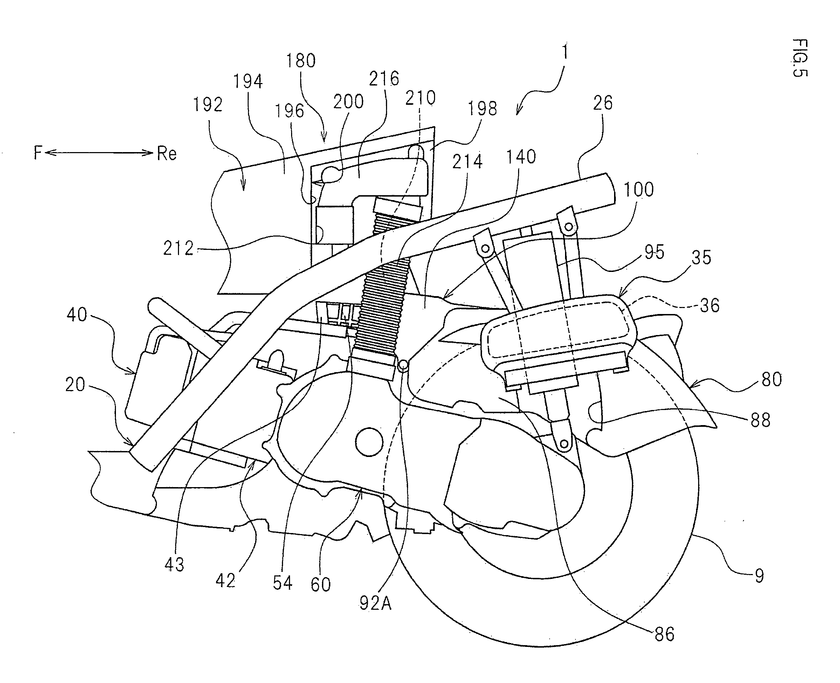

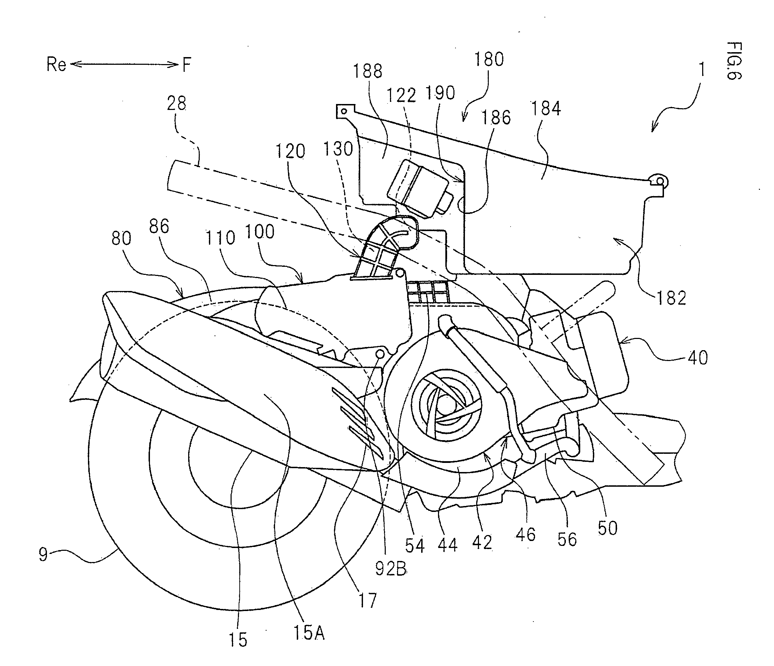

As illustrated in Fig. 4, the motorcycle 1 has a storage box 180 between the left and right seat frames 26 and 28, which is supported by the cross-member 30. The storage box 180 has dimensions such as to accommodate a helmet or the like. An opening is formed in an upper portion of the storage box 180. The seat 13 (see Fig. 1) is configured to be pivotable about the front end portion of the seat 13. When the seat 13 is pivoted so that the rear end portion of the seat 13 moves frontward and obliquely upward, the just-mentioned opening is exposed outside. As illustrated in Fig. 5, the storage box 180 has a left side wall 192 positioned to the right of the left seat frame 26. Also, the storage box 180 has a right side wall 182 positioned to the left of the right seat frame 28, as illustrated in Fig. 6.

As illustrated in Figs. 4 and 5, the motorcycle 1 has a passenger footrest 35 supported on a rear portion of the left seat frame 26 (for example, near the upper portion of the rear wheel 9 when viewed from side). Of the right seat frame 28 and the left seat frame 26, only the left seat frame 26 is provided with the passenger footrest 35. The footrest 35 has a relatively large footrest face 36 (see also Fig. 4). The passenger seated on the seat 13 can put both of his/her feet on the footrest 35.

It is sufficient that the footrest 35 is supported on a rear portion of only one of the left seat frame 26 and the right seat frame 28. The footrest 35 may be supported on a rear portion of the right seat frame 28. However, it is more preferable that the footrest 35 be supported on a rear portion of the left seat frame 26 because, in that way, the passenger can avoid the heat emitted from a muffler 15. Thus, it is preferable that the footrest 35 be provided on one of the left and right seat frames that is opposite the one on which the muffler 15 is provided.

The engine unit 40 is supported by the body frame 20 below the storage box 180. As illustrated in Fig. 8, the engine unit 40 has an engine 42, which is one example of an internal combustion engine, and a V-belt type continuously variable transmission (hereinafter referred to as "CVT") 62. The engine 42 has a crankcase 44, a cylinder block 48 extending frontward and obliquely upward from the crankcase 44, a cylinder head 50 connected to a front portion of the cylinder block 48, and a cylinder head cover 52 connected to a front portion of the cylinder head 50. In the present specification, the entirety of the cylinder block 48, the cylinder head 50, and the cylinder head cover 52 is collectively called a cylinder 46. The cylinder 46 extends frontward and obliquely upward from the crankcase 44. A transmission case 60 is disposed to the left of the crankcase 44. The CVT 62 is disposed in the transmission case 60.

A recessed portion 53, and an intake port and an exhaust port (not shown) that are connected to the recessed portion 53 are formed in the cylinder head 50. An intake pipe 54 (see Fig. 6) is connected to the intake port, and an exhaust pipe 56 (see Fig. 6) is connected to the exhaust port. Note that the intake pipe 54 herein is not limited to a single component but may include one comprising a plurality of components combined together. For example, the intake pipe 54 may be formed by a combination of a pipe connected to the intake port, a throttle body connected to the pipe, a duct connected to the throttle body, and so forth. The top face of a piston 59, the inner circumferential wall of the cylinder block 48, and the recessed portion 53 together form a combustion chamber 57. The piston 59 is connected to a crankshaft 45 via a connecting rod 58. The crank shaft 45 extends leftward and rightward. The crank shaft 45 is accommodated in the crankcase 44.

The CVT 62 has a first pulley 64, which is a driving pulley, a second pulley 66, which is a driven pulley, and a V-belt 68 wrapped around the first pulley 64 and the second pulley 66. A left end portion of the crankshaft 45 protrudes to the left from the crankcase 44. The first pulley 64 is fitted to the left end portion of the crankshaft 45. The second pulley 66 is fitted to a main shaft 70. The main shaft 70 is connected to a rear wheel shaft 72 via a gear mechanism, which is not shown in the drawings. Note that Fig. 8 depicts the state in which the transmission ratio for a front portion of the first pulley 64 and that for a rear portion of the first pulley 64 are different from each other. The second pulley 66 has the same configuration.

The intake pipe 54 is connected to the intake port of the cylinder head 50. The intake pipe 54 extends rearward from the cylinder head 50. As illustrated in Fig. 6, the intake pipe 54 is disposed above the cylinder 46 and below the storage box 180. An air cleaner 100 is connected to a rear portion of the intake pipe 54.

The exhaust pipe 56 is connected to the exhaust port of the cylinder head 50. The exhaust pipe 56 extends rearward from the cylinder head 50. The muffler 15 extending rearward and obliquely upward is connected to a rear end portion of the exhaust pipe 56.

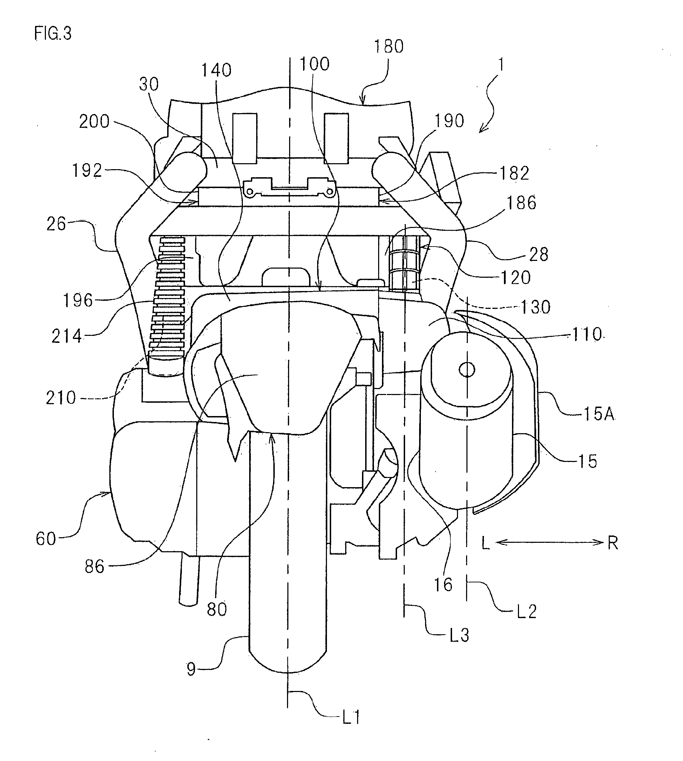

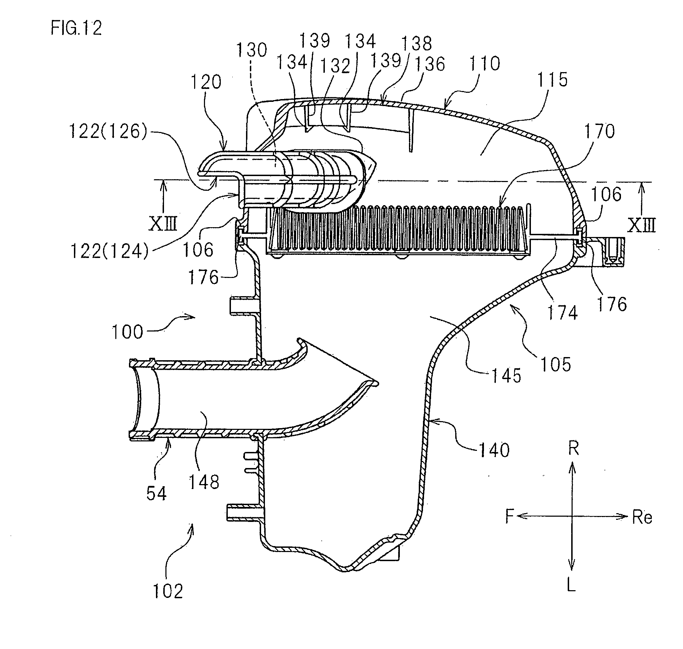

As illustrated in Fig. 12, an air cleaner apparatus 102 according to the present embodiment has the air cleaner 100, a later-described discharge passage 148, and an air inlet unit 120. The air cleaner 100 has an air cleaner case 105. The air cleaner case 105 is provided with the air inlet unit 120. The air inlet unit 120 has an air inlet port 122 for sucking air and an intake passage 130 extending upward from the air cleaner case 105. As illustrated in Fig. 3, the intake passage 130 is disposed to the right of the vehicle center line L1. The air inlet port 122 of the intake passage 130 is disposed to the right of the right side wall 182 of the storage box 180 and to the left of the right seat frame 28. At least a portion of the air inlet port 122 of the intake passage 130 opens toward the right side wall 182 of the storage box 180. In the present embodiment, the intake passage 130 is formed so as to extend frontward, or frontward and obliquely upward. However, the intake passage 130 may extend vertically upward, or frontward and obliquely downward.

It should be noted that in the present specification, the term "vehicle center line" means the line that, as viewed in plan, passes through the lateral (widthwise) center of the front wheel 7 and the lateral (widthwise) center of the rear wheel 9 and extends in a longitudinal direction (a front-rear direction).

As illustrated in Fig. 6, a cover 15A having a plurality of slits 17 formed therein is fitted to the muffler 15. The slits 17 are formed in a front portion of the cover 15A. Each of the slits 17 extends frontward and obliquely downward. The slits 17 are aligned one above the other and arranged parallel to each other. When the motorcycle 1 is running, there is a risk the water on the ground may be splashed up by the front wheel 7, hits the cover 15A, and thereafter scatters upward. However, by providing the slits 17, it is possible to change the direction in which the water splashed up by the front wheel 7 runs. This effectively prevents the water splashed up by the front wheel 7 from hitting the cover 15A and entering the air inlet port 122 of the air cleaner apparatus 102. In addition, after having been momentarily captured by the slits 17, the splashed water becomes easy to flow rearward along the surface of the cover 15A. For this reason, the cover 15A can be cooled by this water. Thus, the muffler 15 that has become hot can be cooled indirectly, and also, the muffler 15 can be cooled effectively.

In the present embodiment, as illustrated in Fig. 3, the center line L2 of the muffler 15 is positioned to the right of the center line L3 of the intake passage 130, when viewed from the rear the motorcycle (vehicle) 1. Preferably, the leftmost end 16 of the muffler 15 is positioned to the right of the center line L3 of the intake passage 130 when viewed from the rear of the vehicle. More preferably, the leftmost end 16 of the muffler 15 is positioned to the right of the rightmost end of the intake passage 130 when viewed from the rear of the vehicle. Such a configuration makes it possible to effectively prevent the heat of the muffler 15 from being transmitted to the intake passage 130, which is connected to the air cleaner 100 and the air cleaner 100.

In the present specification, the term "the center line of the muffler 15" refers to the line that, as viewed in plan, passes through the lateral (widthwise) center of the muffler 15 and extends in a longitudinal direction (a front-rear direction). Likewise, In the present specification, the term "the center line of the intake passage 130" refers to the line that, as viewed in plan, passes through the lateral (widthwise) center of the intake passage 130 and extends in a longitudinal direction (a front/rear direction). In Fig. 3, for convenience in illustration, the vertical lines passing the center lines L1, L2, and L3 are indicated by dash-dotted lines, which are denoted by respective reference characters L1, L2, and L3, in place of the center lines L1, L2, and L3.

As illustrated in Fig. 5, the motorcycle 1 has a rear cushion unit 95 provided between a rear portion of the body frame 20 (typically a rear portion of the left seat frame 26) and a rear portion of the engine unit 40. The rear cushion unit 95 is supported by the left seat frame 26 and the transmission case 60.

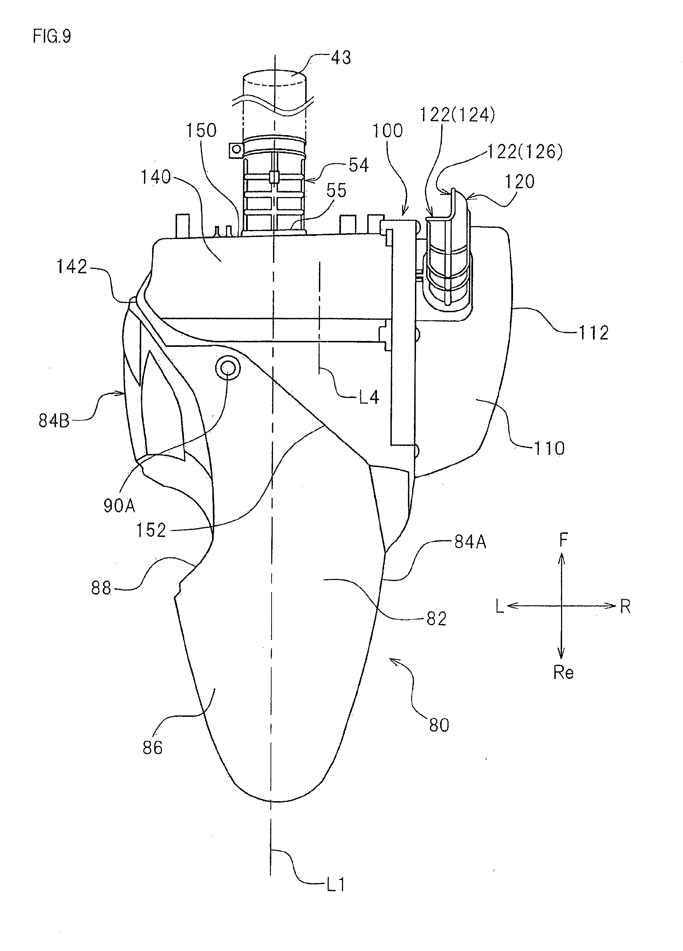

As illustrated in Fig. 9, the air cleaner 100 is connected to the intake pipe 54 for introducing air to the engine unit 42. In the present embodiment, a connecting portion 43 of the intake pipe 54 for connecting the intake pipe 54 to the engine 42 and a connecting portion 55 of the intake pipe 54 for connecting the intake pipe 54 to the air cleaner 100 (second case 140) are disposed on the vehicle center line L1, as viewed in plan. With such a configuration, the intake pipe 54 has no or, if any, a little bend in a right/left direction. Therefore, the air-intake characteristics of the engine 42 are good, and the engine performance improves. In other words, the intake pipe 54 is allowed to extend straight as viewed in plan, so the air-intake resistance can be reduced and the engine performance can be improved.

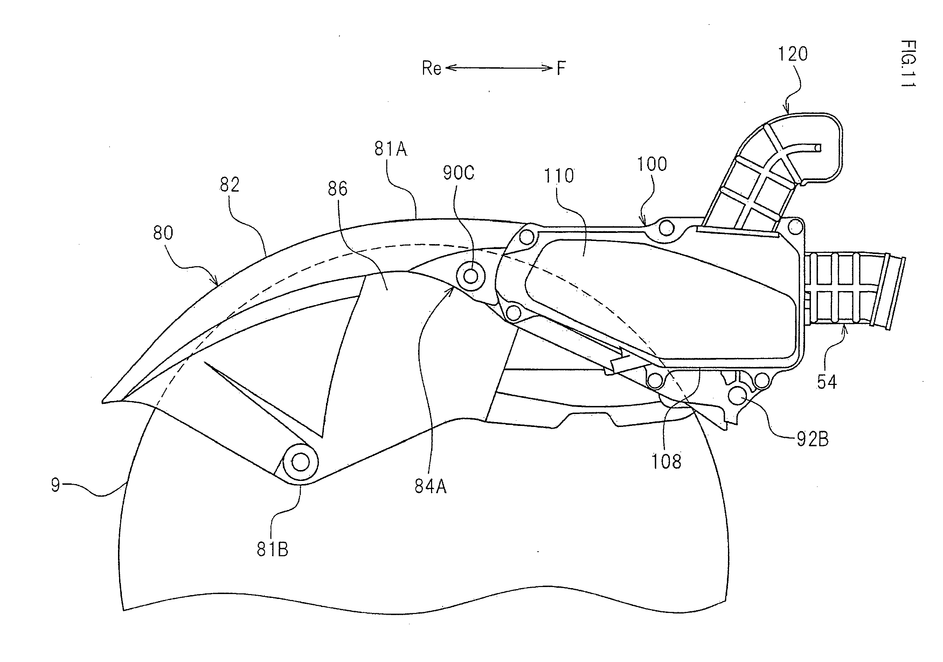

The rear fender 80 has an upper portion 82 positioned above the rear wheel 9 and side portions 84A and 84B positioned to the sides of the rear wheel 9. The air cleaner 100 forms at least a portion of the upper portion 82 of the rear fender 80. As illustrated in Figs. 6 and 11, the air cleaner 100 (first case 110) and the rear wheel 9 are disposed so as to overlap each other as viewed from side.

The front-to-rear length of the right side portion of the air cleaner 100 is set longer than the front-to-rear length of the left side portion thereof. The air inlet unit 120 is provided for one of the left and right side portions of the air cleaner 100 with respect to the vehicle center line L1 that has a longer front-to-rear length than the other. In the present embodiment, the air inlet unit 120 is provided on the right side portion (the later-described first case 110) of the air cleaner 100.

As illustrated in Fig. 12, the air cleaner 100 has the air cleaner case 105 including a first case 110 and a second case 140 each having an opening formed therein, and a main filter element 170 for cleaning air. The first case 110 and the second case 140 are assembled to each other so that their openings face each other with the main filter element 170 interposed therebetween. Thus, the main filter element 170 is accommodated in the air cleaner case 105 so that it divides the interior of the air cleaner case 105 into a first chamber 115 (i.e., the internal space of the first case 110) and a second chamber 145 (i.e., the internal space of the second case 140). The main filter element 170 may be either a dry-type element (an element not impregnated with oil) or a wet-type element (an element impregnated with oil).

In the present specification, the phrase "the main filter element 170 divides the interior of the air cleaner case 105 into the first chamber 115 and the second chamber 145" means to include not only a case in which the main filter element 170 forms the entire dividing wall but also a case in which the main filter element 170 forms a portion of the dividing wall.

The main filter element 170 is fitted to a frame 174. The main filter element 170 can be easily fitted into the case 105 together with the frame 174 by respectively fitting engaging portions 176, 176 formed on both end portions of the frame 174 into engaging grooves 106, 106 provided in the air cleaner case 105. In addition, in case that the main filter element 170 needs to be replaced, the main filter element 170 can be easily removed, so the maintenance can be carried out easily.

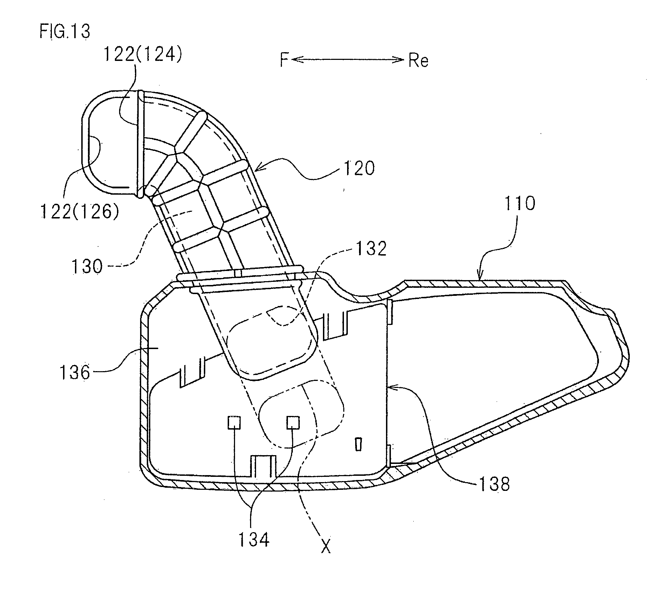

The above-described air inlet unit 120 is connected to the first case 110. More specifically, the first case 110 of the air cleaner 100 is provided with the air inlet unit 120 for sucking the air outside the air cleaner case 105 into the first chamber 115. As described previously, the air inlet unit 120 has the air inlet port 122 for sucking air and the intake passage 130 extending upward from the air cleaner case 105 (more specifically from the first case 110). As illustrated in Fig. 13, the intake passage 130 has an air outlet port 132 for blowing off air into the first chamber 115. As illustrated in Fig. 12, the air outlet port 132 opens in a direction that intersects a pre-filter element 138. The air outlet port 132 opens in a direction that does not intersect the main filter element 170.

As illustrated in Figs. 12 and Fig. 13, the pre-filter element 138 comprising a wet-type element (that is, an element impregnated with oil) is disposed in the first chamber 115. The pre-filter element 138 is disposed spaced apart from the air outlet port 132 so as to be positioned on the axis line of the air outlet port 132. The pre-filter element 138 is disposed so that the blown-off air can hit the pre-filter element 138 but does not pass through the pre-filter element 138.

In the present specification, the phrase "air passes through the pre-filter element 138" means that the air passes through the pre-filter element 138 without substantially changing its flow direction. Therefore, such an air flow that hits the pre-filter element 138 in the front and leaks from the side faces of the pre-filter element 138, not flowing out from the back face of the pre-filter element 138, does not fit the definition of the phrase "air passes through the pre-filter element" herein.

As indicated by the dash-dot-dot line X in Fig. 13, it is preferable that the air outlet port 132 be disposed so that the air outlet port 132 faces a central portion of the pre-filter element 138. In other words, it is preferable that the air outlet port 132 be disposed so that the central region of the pre-filter element 138 is positioned on an extension line of the air outlet port 132. In the present embodiment, the air outlet port 132 is disposed between the main filter element 170 and the pre-filter element 138, as illustrated in Fig. 12. It is preferable that the air outlet port 132 be disposed so that the pre-filter element 138 is positioned on an extension line of at least a portion of the air outlet port 132. It is more preferable that the air outlet port 132 be disposed so that the pre-filter element 138 is positioned on the extension line of the air outlet port 132. In addition, it is preferable that the distance between the air outlet port 132 and the pre-filter element 138 be shorter than the distance between the air outlet port 132 and the main filter element 170. Such a configuration allows the air outside the air cleaner to hit the pre-filter element 138 more effectively.

It is preferable that the surface area of the pre-filter element 138 be greater than the opening area of the air outlet port 132. In addition, it is preferable that the pre-filter element 138 has a surface area greater than the maximum flow passage cross-sectional area of the intake passage 130. Such a configuration allows the air blown off from the air outlet port 132 to hit the pre-filter element 138 sufficiently because the surface area of the pre-filter element 138 is greater. As a result, the air sucked from outside can be cleaned in good condition by the pre-filter element 138.

In the present specification, the term "the surface area of the pre-filter element 138" means the area of the surface of the pre-filter element 138 that is exposed to the first chamber 115 and it does not include the area thereof that is in contact with an opposing wall 136.

It is preferable that the surface area of the main filter element 170 be greater than the surface area of the pre-filter element 138. Such a configuration allows large dust to fall off at the pre-filter element 138 and at the same time relatively small dust to be captured in the pre-filter element 138, so that the air sucked from outside can be preliminarily cleaned. Thereafter, the air can be further cleaned in the main filter element 170.

In the present specification, the term "the surface area of the main filter element 170" means the entire surface area of the main filter element 170 with which the air can be in contact when the air passes from the first chamber 115 to the second chamber 145.

The first case 110 of the air cleaner 100 has an opposing wall 136 facing the air outlet port 132 and not allowing air to pass therethrough. The opposing wall 136 faces the main filter element 170 in the first chamber 115. The opposing wall 136 extends in a vertical direction. The pre-filter element 138 provided on the opposing wall 136 is disposed so as to extend in a vertical direction. Large dust contained in the air sucked from outside tends to fall off after it strikes the pre-filter element 138. As a result, large dust is not captured by the pre-filter element 138 in a large amount, so the pre-filter element 138 is prevented from clogging.

In the present embodiment, the first case 110 of the air cleaner 100 has hook members 134, 134 protruding from the opposing wall 136. The pre-filter element 138 is hooked on the hook members 134, 134, whereby the pre-filter element 138 is provided on the opposing wall 136. As illustrated in Fig. 12, the hook members 134 are fitted in fitting holes 139 formed in the pre-filter element 138 so that the pre-filter element 138 can be mounted onto the opposing wall 136. Such a configuration makes the maintenance of the pre-filter element 138 easy.

In the present embodiment, the pre-filter element 138 is detachably mounted to the opposing wall 136 by being hooked on the hook members 134, 134, but the method of mounting the pre-filter element 138 to the opposing wall 136 is not particularly limited. For example, the pre-filter element 138 may be mounted directly to the opposing wall 136 by using, for example, an adhesive agent.

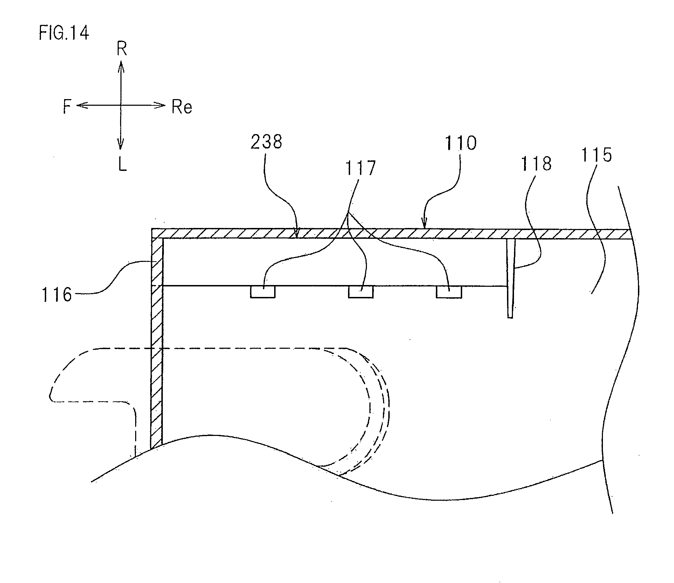

In addition, an example of a modified embodiment is shown in Fig. 14, in which a pre-filter element 238 is fitted into and removed from a slot 116 provided in a front end portion of the first case 110. The pre-filter element 238 inserted from the slot 116 into the first chamber 115 is prevented from moving in the frontward and rearward directions by a positioning wall 118 formed in the first chamber 115. In addition, the pre-filter element 238 is prevented from moving in the leftward and rightward directions by a positioning wall 117 formed in the first chamber 115. When the pre-filter element 238 is fitted in the first chamber 115, the slot 116 is closed by a lid or the like so that the outside air does not flow in through the slot 116.

In the present embodiment, the pre-filter element 138 is provided on a portion of the opposing wall 136 (that is, near the air outlet port 132), but this configuration is merely illustrative. For example, the pre-filter element 138 may be provided over the entire surface of the opposing wall 136. Alternatively, the pre-filter element 138 may be provided on a wall that makes up the first chamber 115 but does not oppose the main filter element 170 (i.e., a different wall from the opposing wall 136).

The second case 140 of the air cleaner 100 is provided with the discharge passage 148 for discharging the air within the second chamber 145 out of the air cleaner case 105. In the present embodiment, the discharge passage 148 constitutes a part of the intake pipe 54 that allows the second case 140 of the air cleaner 100 to communicate with the engine 42.

In the air cleaner apparatus 102, the air outside the air cleaner case 105 is sucked from the air inlet port 122. The sucked air passes through the intake passage 130 and flows from the air outlet port 132 toward a central portion of the pre-filter element 138. When the sucked air strikes the pre-filter element 138, large dust contained in the air falls off into the first chamber 115. On the other hand, a portion of small dust contained in the air is not captured by the pre-filter element 138 and is allowed to flow, while the other portion thereof is captured by the pre-filter element 138. Thus, the air is cleaned by the pre-filter element 138.

Meanwhile, as the small dust is kept captured by the pre-filter element 138, clogging may occur in the pre-filter element 138 to some degree. However, the air that has been sucked in the first chamber 115 can pass through the main filter element 170 without passing through the pre-filter element 138. In addition, the sucked air strikes the surface of the pre-filter element 138 and changes its flow direction. Therefore, the increase of the air resistance resulting from the clogging can be prevented.

The air cleaned by the pre-filter element 138 thereafter passes through the main filter element 170. At this time, the small dust that was not captured by the pre-filter element 138 is captured by the main filter element 170. As a result, the air that has been cleaned in good condition can be supplied to the engine 42.

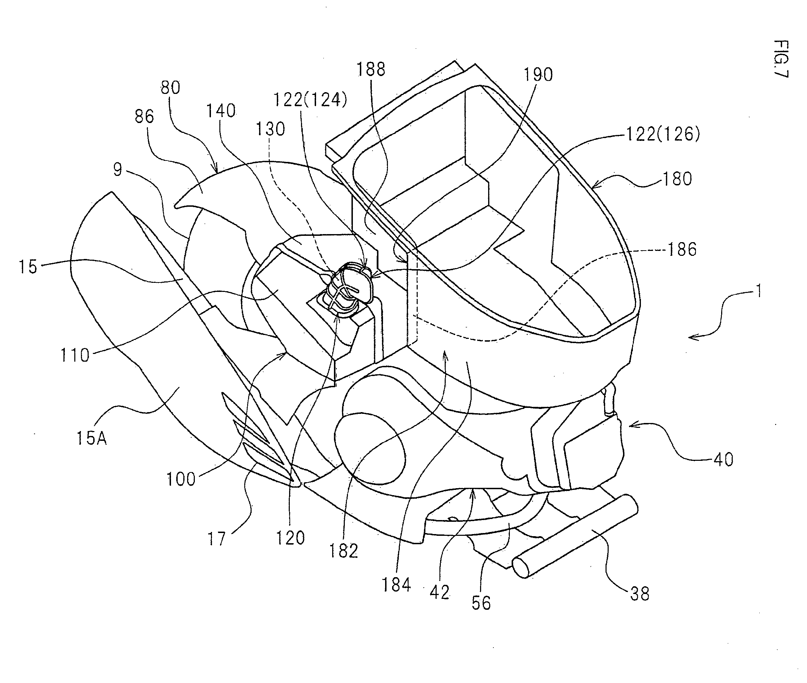

Next, the air inlet port 122 of the intake passage 130 will be described in detail. As illustrated in Figs. 6 and 7, at least a portion of the air inlet port 122 of the intake passage 130 faces the right side wall 182 of the storage box 180.

In the present embodiment, the intake passage 130 is formed by a duct that cannot contract or expand. In such a configuration, the length of the intake passage 130 is invariable, and accordingly, the length of the whole intake passage of the engine 42 (that is, the intake passage 130 of the air inlet unit 120, the passage in the air cleaner 100, and the intake pipe 54) is invariable. As a result, fluctuations in the intake pulse can be suppressed, and the performance of the engine 42 is stabilized.

As illustrated in Figs. 3 and 6, the right side wall 182 of the storage box 180 is positioned to the left of the right seat frame 28. A recessed portion 190 recessed toward the left is formed in the right side wall 182 of the storage box 180. The right side wall 182 of the storage box 180 has a front side wall 184, a rear wall 186 extending leftward from the rear end of the front side wall 184, and a rear side wall 188 extending rearward from the leftmost end of the rear wall 186. The recessed portion 190 is defined by at least the rear wall 186 and the rear side wall 188.

As illustrated in Figs. 3 and 5, the storage box 180 has the left side wall 192 positioned to the right of the left seat frame 26. A recessed portion 200 recessed toward the right is formed in the left side wall 192 of the storage box 180. The left side wall 192 of the storage box 180 has a front side wall 194, a rear wall 196 extending rightward from the rear end of the front side wall 194, and a rear side wall 198 extending rearward from the rightmost end of the rear wall 196. The recessed portion 200 is defined by at least the rear wall 196 and the rear side wall 198.

As illustrated in Fig. 4, in the present embodiment, at least a portion of the air inlet port 122 of the intake passage 130 is disposed in the recessed portion 190. That is, as illustrated in Fig. 2, when viewed from the front of the motorcycle 1, at least a portion of the air inlet port 122 is hidden behind the storage box 180 and cannot be seen. The mud, dust, water, and the like that are splashed up by the front wheel 7 does not easily enter the recessed portion 190. As a result, the air inlet port 122 is prevented from mud, dust, water and the like from entering.

Preferably, at least a portion of the air inlet port 122 of the intake passage 130 faces the rear wall 186. In the present embodiment, as illustrated in Fig. 7, the air inlet port 122 of the intake passage 130 has a first portion 124 that opens frontward and a second portion 126 that opens (i.e., has an opening) leftward. As illustrated in Fig. 4, the air inlet port 122 is disposed so that the rightmost end 187 of the rear wall 186 is positioned to the right of the rightmost end 125 of the first portion 124. The first portion 124 of the air inlet port 122 faces the rear wall 186 of the right side wall 182. The second portion 126 of the air inlet port 122 faces the rear side wall 188 of the right side wall 182. By disposing the first portion 124 of the air inlet port 122 so as to face the rear wall 186 and disposing the second portion 126 of the air inlet port 122 so as to face the rear side wall 188 in this way, the advantageous effects of disposing the air inlet port 122 within the recessed portion 190 can be obtained without reducing the size of the air inlet port 122. That is, both ensuring sufficient housing space of the storage box 180 and preventing the entry of dust into the air cleaner 100 can be achieved at the same time.

As illustrated in Fig. 9, the air inlet port 122 of the present embodiment has an L-shape as viewed in plan, but is not limited to having such a shape. For example, the air inlet port 122 may have a shape such as to open obliquely leftward and frontward.

The air inlet port 122 is disposed in the space between the right of the right side wall 182 of the storage box 180 and the left of the right seat frame 28, which has been an unutilized space in the past. Thus, it is not necessary to provide extra space for the air inlet port 122, and it is possible to utilize the existing space effectively. Moreover, the water, mud, dust, and the like that are splashed up from the front wheel 7 are unlikely to enter the air inlet port 122 because at least a portion of the air inlet port 122 is disposed so as to face the right side wall 182 of the storage box 180. As a result, the amount of dust and the like sucked into the air cleaner 100 is reduced, so the performance deterioration of the engine 42 can be prevented effectively.

Preferably, as illustrated in Fig. 6, at least a portion of the air inlet port 122 is disposed so as to overlap the right seat frame 28 when viewed from the side of the vehicle. With such a configuration, the right seat frame 28 can prevent mud and dust from entering the air inlet port 122.

In the motorcycle 1 according to the present embodiment, the intake passage 130 connected to the air cleaner 100 is disposed in the space between the right of the right side wall 182 of the storage box 180 and the left of the right seat frame 28. For this reason, another intake passage 210 extending upward from the transmission case 60 can be disposed to the left of the vehicle center line L1 so as not to interfere with the intake passage 130 connected to the air cleaner 100, as illustrated in Figs. 3 and 5. In other words, the intake passage 210 can be disposed in the space between the left of the left side wall 192 of the storage box 180 and the right of the left seat frame 26.

The intake passage 210 is a passage for introducing cooling air to the CVT 62 in the transmission case 60. As illustrated in Fig. 5, the intake passage 210 has a bellows-shaped duct 214 that can freely contract and expand, and a duct 216 integrally formed with the recessed portion 200 of the left side wall 192 of the storage box.

An air inlet port 212 that opens leftward is formed at a distal end portion of the duct 216. At least a portion of the air inlet port 212 is disposed in the recessed portion 200. The air inlet port 212 is an opening for sucking air. In the present embodiment, the entirety of the air inlet port 212 is disposed in the recessed portion 200. The air inlet port 212 opens toward the left from a rear side wall 198 of the left side wall 192. However, like the above-described air inlet port 122 of the intake passage 130, it is sufficient that at least a portion of the air inlet port 212 should face the rear wall 196. The mud, dust, water, and the like that are splashed up by the front wheel 7 does not easily enter the recessed portion 200. As a result, the entry of mud, dust, water and the like through the air inlet port 212 into the transmission case 60 can be prevented.

Next, the rear fender 80 will be described in detail. As illustrated in Fig. 9, the air cleaner 100 forms at least a portion of the upper portion 82 of the rear fender 80. In the present embodiment, a portion of the upper portion 82 of the rear fender 80 is formed by the second case 140. The first case 110 is disposed at a side of the rear fender 80. By disposing the first case 110 at a side of the rear fender 80 in this way, the second case 140 is ensured to have a large capacity.

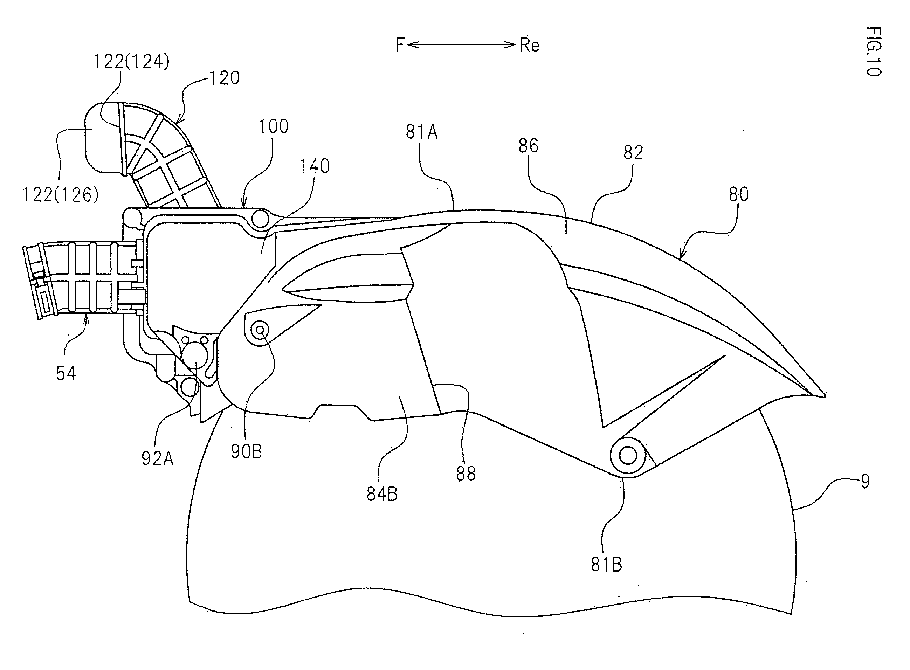

The portion of the rear fender 80 excluding the air cleaner 100 (hereinafter referred to as a "main fender portion 86") and the air cleaner 100 are assembled with each other. As illustrated in Fig. 9, the main fender portion 86 and the second case 140 of the air cleaner 100 are fastened to each other by a fastener 90A in the upper portion 82 of the rear fender 80. As illustrated in Fig. 10, the main fender portion 86 and the second case 140 of the air cleaner 100 are fastened to each other by a fastener 90B in the left side portion 84B of the rear fender 80. As illustrated in Fig. 11, the main fender portion 86 and the first case 110 of the air cleaner 100 are fastened to each other by a fastener 90C in the right side portion 84A of the rear fender 80. Examples of the fasteners 90A to 90C in the present embodiment include commonly-used bolts, screws, and rivets.

As illustrated in Fig. 5, the engine unit 40 and the air cleaner 100, which is a part of the rear fender 80, are fastened to each other by a fastener 92A. As illustrated in Fig. 6, the main fender portion 86, which is a part of the rear fender 80, and the engine unit 40 are fastened to each other by a fastener 92B. Thus, the air cleaner 100 and the main fender portion 86 are fixed to each other, and in addition, the air cleaner 100 and the main fender portion 86 are both fixed to the engine unit 40. Therefore, even when the rear fender 80 swings, the air cleaner 100 and the main fender portion 86 can be prevented from chattering and position shifting.

As illustrated in Fig. 9, the leftmost end 142 of the air cleaner 100 (more specifically, the leftmost end 142 of the second case 140) is positioned to the left of the vehicle center line L1. The rightmost end 112 of the air cleaner 100 (more specifically, the rightmost end 112 of the first case 110) is positioned to the right of the vehicle center line L1. The entire lateral part of a front portion 150 of the rear fender 80 is formed by the air cleaner 100. By forming the entire part of the front portion 150 of the rear fender 80 by the air cleaner 100 in this way, the width of the air cleaner 100 can be made large. As a result, the air cleaner 100 can be ensured to have a large capacity. It should be noted that in the present embodiment, the front portion 150 of the rear fender 80 is the front end face of the air cleaner 100, but the front portion 150 may be a portion that is more rearward than the front end face.

A boundary 152 between the main fender portion 86 and the air cleaner 100 is inclined with respect to the vehicle center line L1, as viewed in plan. The air cleaner 100 is formed so that its front-to-rear length is longer either toward the right or toward the left, as viewed in plan. In the present embodiment, a portion of the boundary 152 between the main fender portion 86 and the air cleaner 100 (more specifically, a region on the right of the laterally central part of the air cleaner 100) is inclined with respect to the vehicle center line L1 as viewed in plan. In other words, the air cleaner 100 is formed so that its front-to-rear length is longer from the left toward the right. With such a configuration, the air cleaner 100 can be ensured to have a large capacity. When the air cleaner 100 has a large capacity, a large amount of air can be sucked in at one time, so that the engine performance can be improved.

As illustrated in Fig. 4, the air cleaner 100 is formed so that, as viewed in plan, its front-to-rear length is longer from one of the left and right sides on which the footrest 35 is provided toward the other. In the present embodiment, the footrest 35 is provided to the left seat frame 26. The air cleaner 100 is formed so that its front-to-rear length is longer from the left toward the right. Thus, by making the front-to-rear length of the air cleaner 100 longer while avoiding the interference between the air cleaner 100 and the footrest 35, the air cleaner 100 can be ensured to have a large capacity.

As illustrated in Fig. 9, in the present embodiment, a recessed portion 88 in which a portion of the rear cushion unit 95 (see Fig. 5) can be accommodated is formed in a left portion of the rear fender 80. The middle position between the leftmost end 142 and the rightmost end 112 of the air cleaner 100 (see reference character L4 in Fig. 9) is biased rightward from the vehicle center line L1. In other words, the middle position of the air cleaner 100 is biased toward the opposite side to one of the left and right sides of the vehicle center line L1 in which the recessed portion 88 of the rear fender 80 is formed.

As illustrated in Fig. 11, in the present embodiment, the lower end 108 (for example, the bottom face portion of the first chamber 115) of the air cleaner 100 is positioned to be lower than the middle position between an upper end 81 A and a lower end 81B of the rear fender 80. The upper end 81A of the rear fender 80 refers to the vertically uppermost portion of the main fender portion 86 in the rear fender 80 mounted to the engine unit 40. Typically, the vertically uppermost portion of the main fender portion 86 and the vertically uppermost portion of the air cleaner 100 are located at substantially the same height from the ground. The lower end 81 B of the rear fender 80 refers to the vertically lowermost portion of the main fender portion 86 in the rear fender 80 mounted to the engine unit 40. With such a configuration, the position of the seat 13 can be made low, for example, because the air cleaner 100 is disposed at a low position. Note that the lower end 108 of the air cleaner 100 may be a bottom face portion of the second chamber 145, depending on the shape of the air cleaner 100.

The vertical length of the air cleaner 100 varies from the front toward the rear. As illustrated in Fig. 11, in the present embodiment, the maximum vertical length of the air cleaner 100 (for example, the maximum vertical length of the first chamber 115) is shorter than the vertical length of the rear fender 80 at the upper end 81A position (in other words, the vertical length thereof in the vertical cross section through the position of the upper end 81A). With such a configuration, an additional spatial margin can be ensured above the air cleaner 100 because the vertical length of the air cleaner 100 is short. As a result, it becomes possible to dispose other vehicle components above the air cleaner 100, for example. Alternatively, the position of the seat 13 may be lowered, for example. Note that the maximum vertical length of the air cleaner 100 may be the maximum vertical length of the second chamber 145, depending on the shape of the air cleaner 100.

The air cleaner 100 forms at least a portion of the upper portion 82 of the rear fender 80, and therefore, it is not necessary to dispose an air cleaner separately above the rear fender 80 (for example, over the rear fender 80). Accordingly, there is a greater additional spatial margin than the case in which an air cleaner is disposed above the rear fender, so the capacity of the air cleaner 100 can be made larger. Thereby, the air cleaning performance of the air cleaner 100 can be improved.

As described above, in the motorcycle 1 according to the present embodiment, the transmission case 60 that accommodates the CVT 62 is disposed on the left of the motorcycle 1, and the intake passage 130 extending upward from the air cleaner 100 is disposed to the right of the vehicle center line L1. For this reason, even if another intake passage 210 for supplying cooling air to the CVT 62 in the transmission case 60 is provided, the just-mentioned intake passage 210 and the intake passage 130 connected to the air cleaner 100 do not interfere with each other. The air inlet port 122 of the intake passage 130 connected to the air cleaner 100 is disposed in the space between the right of the right side wall 182 of the storage box 180 and the left of the right seat frame 28, which has in the past been an unutilized space. Therefore, it is not necessary to provide extra space for providing the air inlet port 122, and it is possible to utilize the existing space effectively. Moreover, the water, mud, dust, and the like that are splashed up from the front wheel 7 are unlikely to enter the air inlet port 122 because at least a portion of the air inlet port 122 is disposed so as to open toward the right side wall 182 of the storage box 180.

In the present embodiment, the motorcycle has the passenger footrest 35 supported at a rear portion of only the left seat frame 26 of the right and left seat frames 26 and 28. Since the intake passage 130 connected to the air cleaner 100 is disposed to the right of the vehicle center line L1, the passenger footrest 35 can be disposed at the left of the motorcycle 1 without being interfered by the air cleaner 100. Therefore, the passenger footrest 35 can be placed even if it has a large size.

In the present embodiment, the motorcycle 1 has the exhaust pipe 56 connected to the cylinder 46 and extending rearward, and the muffler 15 connected to a rear end portion of the exhaust pipe 56 and extending rearward and obliquely upward. The center line L2 of the muffler 15 is positioned to the right of the center line L3 of the intake passage 130 when viewed from the rear of the vehicle. In addition, in the present embodiment, the leftmost end of the muffler 15 is positioned to the right of the center line L3 of the intake passage 130 when viewed from the rear of the vehicle. In addition, in the present embodiment, the leftmost end of the muffler 15 is positioned to the right of the rightmost end of the intake passage 130 when viewed from the rear of the vehicle. Since the muffler 15 is offset so as to be positioned at the right of the motorcycle 1, the heat of the muffler 15 is inhibited from being transmitted to the air cleaner 100 and the intake passage 130 connected to the air cleaner 100.

In the present embodiment, the recessed portion 190 recessed toward the left is formed in the right side wall 182 of the storage box 180. At least a portion of the air inlet port 122 of the intake passage 130 is disposed within the recessed portion 190. As a result, the mud, dust, water and the like can be prevented from entering the air inlet port 122 provided within the recessed portion 190.

In the present embodiment, the right side wall 182 of the storage box 180 has a front side wall 184, a rear wall 186 extending leftward from the rear end of the front side wall 184, and a rear side wall 188 extending rearward from the leftmost end of the rear wall 186. The recessed portion 190 is defined by at least the rear wall 186 and the rear side wall 188. At least a portion of the air inlet port 122 of the intake passage 130 faces the rear wall 186. Thus, since at least a portion of the air inlet port 122 faces the rear wall 186 of the storage box 180, the mud, dust, water and the like can be prevented from entering the air inlet port 122 more effectively.

In the present embodiment, the air inlet port 122 of the intake passage 130 has a first portion 124 that opens frontward and a second portion 126 that opens leftward. The air inlet port 122 is disposed so that the rightmost end 187 of the rear wall 186 is positioned to the right of the rightmost end 125 of the first portion 124. The first portion 124 faces the rear wall 186. The second portion 126 faces the rear side wall 188. Thus, the advantageous effects of disposing the air inlet port 122 within the recessed portion 190 can be obtained without making the size of the air inlet port 122 smaller, by disposing the air inlet port 122 so that the rightmost end 125 of the rear wall 186 is positioned to the right of the rightmost end 125 of the first portion 124 and disposing the first portion 124 so as to face the rear wall 186. That is, both ensuring sufficient housing space of the storage box 180 and preventing the entry of dust into the air cleaner 100 can be achieved at the same time.

In the present embodiment, the intake passage 130 is formed by a duct that is non-contractible and non-expandable. Thus, the length of the intake passage 130 is invariable, and accordingly, the length of the whole intake passage of the engine is invariable. As a result, fluctuations in the intake pulse can be suppressed, and the performance of the engine 42 is stabilized.

In the present embodiment, at least a portion of the air inlet port 122 is disposed so as to overlap the right seat frame 28 when viewed from the side of the vehicle. Entry of mud, dust, water and the like into the air inlet port 122 can be prevented by the right seat frame 28.

In the present embodiment, the motorcycle has another intake passage 210 disposed to the left of the vehicle center line L1 and extending upward from the transmission case 60. Thus, the other intake passage 210 can be disposed without interfering with the intake passage 130 connected to the air cleaner 100.

In the present embodiment, the storage box 180 has the left side wall 192 positioned to the right of the left seat frame 26. The left side wall 192 has another recessed portion 200 recessed rightward. The other intake passage 210 has the air inlet port 212 for sucking air. At least a portion of the air inlet port 21 of the intake passage 210 is disposed within the other recessed portion 200. As a result, the mud, dust, water and the like can be prevented from entering the air inlet port 212 provided within the other recessed portion 200.

In the present embodiment, at least a portion of the other intake passage 210 is formed by a bellows-shaped duct. Since the other intake passage 210 is formed by a bellows-shaped duct 214 in this way, it is easy to form a desired path for the intake passage 210.

In the present embodiment, the engine unit 40 is swingably supported by the body frame 20. Therefore, even in the motorcycle 1 having the engine unit of such a configuration as well, it is possible to prevent mud and dust from entering the air inlet ports 122 and 212.

### REFERENCE SIGNS LIST

1 -- Motorcycle
5 -- Vehicle body
7 -- Front wheel
20 -- Body frame
26 -- Left seat frame
28 -- Right seat frame
30 -- Cross member
35 Footrest
40 -- Engine unit
60 -- Transmission case
100 -- Air cleaner
122 -- Air inlet port
124 -- First portion
126 -- Second portion
130 -- Intake passage
170 -- Main filter element (dry-type element)
180 -- Storage box
182 -- Right side wall
184 -- Front side wall
186 -- Rear wall
188 -- Rear side wall
190 -- Recessed portion
192 -- Left side wall
194 -- Front side wall
196 -- Rear wall
198 -- Rear side wall
200 -- Recessed portion (another recessed portion)
210 -- Another intake passage
212 -- Air inlet port
214 -- Bellows-shaped duct

## Claims

1. A straddle-type vehicle comprising:
a body frame (20) having a main frame (24) extending rearward and obliquely downward from a head pipe (22), left and right seat frames (26, 28) each extending rearward and obliquely upward from the main frame, and a cross member (30) mounted between the left and right seat frames;
a storage box (180) having a right side wall positioned to the left of the right seat frame, the storage box being supported between the left and right seat frames (26, 28) by the cross member (30);
an engine unit (40) having a crankcase (44), a cylinder (46) extending frontward and obliquely
upward from the crankcase, a transmission case (60) disposed to the left of the crankcase, and a belt-type continuously variable transmission (62) disposed in the transmission case, the engine unit (40) being supported below the storage box (180) by the body frame (20);
an intake pipe (54) extending rearward from the cylinder (46) and disposed above the cylinder and below the storage box;
an air cleaner (100) connected to a rear portion of the intake pipe (54); and
an intake passage (130) extending upward from the air cleaner (100) and having an air inlet port (122) for sucking air, wherein:
the intake passage (130) is disposed to the right of the vehicle center line;
the air inlet port (122) of the intake passage is disposed to the right of the right side wall of the storage box (180) and to the left of the right seat frame (28); and
at least a portion of the air inlet port (122) of the intake passage opens toward the right side wall (182) of the storage box (180).

2. The straddle-type vehicle according to claim 1, further comprising a passenger footrest (35) supported at a rear portion of only the left seat frame (26) of the right and left seat frames.

3. The straddle-type vehicle according to claim 1, further comprising:
an exhaust pipe (56) connected to the cylinder (46) and extending rearward; and
a muffler (15) connected to a rear end portion of the exhaust pipe and extending rearward and obliquely upward, and wherein
the center line of the muffler (15) is positioned to the right of the center line of the intake passage (130) when viewed from the rear of the vehicle.

4. The straddle-type vehicle according to claim 3, wherein a leftmost end of the muffler (15) is positioned to the right of the center line of the intake passage (130) when viewed from the rear of the vehicle.

5. The straddle-type vehicle according to claim 4, wherein a leftmost end of the muffler (15) is positioned to the right of a rightmost end of the intake passage (130) when viewed from the rear of the vehicle.

6. The straddle-type vehicle according to claim 1, wherein:
the right side wall (182) of the storage box (180) has a recessed portion (190) recessed leftward;
and
at least a portion of the air inlet port (122) of the intake passage (130) is disposed within the
recessed portion (190).

7. The straddle-type vehicle according to claim 6, wherein:
the right side wall (182) of the storage box (180) has a front side wall, a rear wall extending leftward from the rear end of the front side wall, and a rear side wall extending rearward from a leftmost end of the rear wall;
the recessed portion (190) is defined by at least the rear wall and the rear side wall; and
at least a portion of the air inlet port of the intake passage faces the rear wall.

8. The straddle-type vehicle according to claim 7, wherein:
the air inlet port (122) of the intake passage (130) has a first portion that opens frontward and a second portion that opens leftward;
the air inlet port is disposed so that a rightmost end of the rear wall is positioned to the right of a rightmost end of the first portion;
the first portion faces the rear wall; and
the second portion faces the rear side wall.

9. The straddle-type vehicle according to claim 1, wherein the intake passage (130) is formed by a duct being non-contractible and non-expandable.

10. The straddle-type vehicle according to claim 1, wherein at least a portion of the air inlet port (122) is disposed so as to overlap the right seat frame (28) when viewed from a side of the vehicle.

11. The straddle-type vehicle according to claim 1, further comprising another intake passage (210) disposed to the left of the vehicle center line and extending upward from the transmission case (60).

12. The straddle-type vehicle according to claim 11, wherein:
the storage box (180) has a left side wall (192) positioned to the right of the left seat frame (26);
the left side wall has another recessed portion (200) recessed rightward;
the other intake passage (210) has an air inlet port (212) for sucking air; and
at least a portion of the air inlet port of the other intake passage is disposed within the other recessed portion (200).

13. The straddle-type vehicle according to claim 11, wherein at least a portion of the other intake passage (210) is formed by a bellows-shaped duct.

14. The straddle-type vehicle according to claim 1, wherein the engine unit (40) is swingably supported by the body frame (20).

## Patentansprüche

1. Ein Grätsch-Typ-Fahrzeug, das folgende Merkmale aufweist:
einen Körperrahmen (20) mit einem Hauptrahmen (24), der sich von einem Hauptrohr (22) nach hinten und schräg nach unten erstreckt, einen linken und rechten Sitzrahmen (26, 28), die sich von dem Hauptrahmen jeweils nach hinten und schräg nach oben erstrecken, und einen Querträger (30), der zwischen dem linken und
rechten Sitzrahmen befestigt ist;
eine Aufbewahrungsbox (180) mit einer rechten Seitenwand, die links von dem rechten Sitzrahmen positioniert ist, wobei die Aufbewahrungsbox zwischen dem linken und rechten Sitzrahmen (26) durch den Querträger (30) getragen wird,
eine Motoreinheit (40) mit einem Kurbelgehäuse (44), einem Zylinder (46), der sich von dem Kurbelgehäuse nach vorne und schräg nach oben erstreckt, einem Getriebegehäuse (60), das links von dem Kurbelgehäuse angeordnet ist, und einem kontinuierlich veränderlichen Getriebe (62) vom Riementyp, das in dem Getriebegehäuse angeordnet ist, wobei die Motoreinheit (40) unter der Aufbewahrungsbox (180) durch den Körperrahmen (20) getragen wird;
ein Ansaugrohr (54), das sich von dem Zylinder (46) nach hinten erstreckt und über dem Zylinder und unter der Aufbewahrungsbox angeordnet ist;
ein Luftfilter (100), das mit einem hinteren Abschnitt des Ansaugrohrs (54) verbunden ist; und
einen Ansaugdurchlass (130), der sich von dem Luftfilter (100) nach oben erstreckt und ein Lufteinlasstor (122) zum Ansaugen von Luft aufweist, wobei:
der Ansaugdurchlass (130) rechts von der Fahrzeugmittellinie angeordnet ist;
das Lufteinlasstor (122) des Ansaugdurchlasses rechts von der rechten Seitenwand der Aufbewahrungsbox (180) und links von dem rechten Sitzrahmen (28) angeordnet ist; und
zumindest ein Abschnitt des Lufteinlasstors (122) des Ansaugdurchlasses sich zu der rechten Seitenwand (182) der Aufbewahrungsbox (180) öffnet.

2. Das Grätsch-Typ-Fahrzeug gemäß Anspruch 1, das ferner eine Mitfahrerfußstütze (35) aufweist, die an einem hinteren Abschnitt von nur dem linken Seitenrahmen (26) des rechten und linken Sitzrahmens angeordnet ist.

3. Das Grätsch-Typ-Fahrzeug gemäß Anspruch 1, das ferner folgende Merkmale aufweist:
ein Abgasrohr (56), das mit dem Zylinder (46) verbunden ist und sich nach hinten erstreckt; und
einen Schalldämpfer (15), der mit einem hinteren Endabschnitt des Abgasrohrs verbunden ist und sich nach hinten und schräg nach oben erstreckt, und wobei
die Mittellinie des Schalldämpfers (15) von der Rückseite des Fahrzeugs aus gesehen rechts von der Mittellinie des Ansaugdurchlasses (130) positioniert ist.

4. Das Grätsch-Typ-Fahrzeug gemäß Anspruch 3, bei dem ein am weitesten links gelegenes Ende des Schalldämpfers (15) von der Rückseite des Fahrzeugs aus gesehen rechts von der Mittellinie des Ansaugdurchlasses (130) positioniert ist.

5. Das Grätsch-Typ-Fahrzeug gemäß Anspruch 4, bei dem ein am weitesten links gelegenes Ende des Schalldämpfers (15) von der Rückseite des Fahrzeugs aus gesehen rechts von einem am weitesten rechts gelegenen Ende des Ansaugdurchlasses (130) positioniert ist.

6. Das Grätsch-Typ-Fahrzeug gemäß Anspruch 1, bei dem:
die rechte Seitenwand (182) der Aufbewahrungsbox (180) einen ausgenommenen Abschnitt (190) aufweist, der nach links ausgenommen ist; und
zumindest ein Abschnitt des Lufteinlasstors (122) des Ansaugdurchlasses (130) in dem ausgenommenen Abschnitt (190) angeordnet ist.

7. Das Grätsch-Typ-Fahrzeug gemäß Anspruch 6, bei dem:
die rechte Seitenwand (182) der Aufbewahrungsbox (180) eine vordere Seitenwand,
eine hintere Wand, die sich von dem rechten Ende der vorderen Seitenwand nach links erstreckt, und eine hintere Seitenwand, die sich von einem am weitesten links gelegenen Ende der Hinterwand nach hinten erstreckt, aufweist;
der ausgenommene Abschnitt (190) durch zumindest die Hinterwand und die hintere Seitenwand definiert ist; und
zumindest ein Abschnitt des Lufteinlasstors des Ansaugdurchlasses der Hinterwand zugewandt ist.

8. Das Grätsch-Typ-Fahrzeug gemäß Anspruch 7, bei dem:
das Lufteinlasstor (122) des Ansaugdurchlasses (130) einen ersten Abschnitt aufweist, der sich nach vorne öffnet, und einen zweiten Abschnitt, der sich nach links öffnet;
das Lufteinlasstor so angeordnet ist, dass ein am weitesten rechts gelegenes Ende der Hinterwand rechts von einem am weitesten rechts gelegenen Ende des ersten Abschnitts positioniert ist;
der erste Abschnitt der Hinterwand zugewandt ist; und
der zweite Abschnitt der hinteren Seitenwand zugewandt ist.

9. Das Grätsch-Typ-Fahrzeug gemäß Anspruch 1, bei dem der Ansaugdurchlass (130) durch einen Kanal gebildet wird, der nicht zusammenziehbar und nicht ausdehnbar ist.

10. Das Grätsch-Typ-Fahrzeug gemäß Anspruch 1, bei dem zumindest ein Abschnitt des Lufteinlasstors (122) angeordnet ist, um den rechten Sitzrahmen (28) von einer Seite des Fahrzeugs aus gesehen zu überlappen.

11. Das Grätsch-Typ-Fahrzeug gemäß Anspruch 1, das ferner einen weiteren Ansaugdurchlass (210) aufweist, der links von der Fahrzeugmittellinie angeordnet ist und sich von dem Getriebegehäuse (60) nach oben erstreckt.

12. Das Grätsch-Typ-Fahrzeug gemäß Anspruch 11, bei dem:
die Aufbewahrungsbox (180) eine linke Seitenwand (192) aufweist, die rechts von dem linken Sitzrahmen (26) positioniert ist;
die linke Seitenwand einen weiteren ausgenommenen Abschnitt (200) aufweist, der nach rechts ausgenommen ist;
der andere Ansaugdurchlass (210) ein Lufteinlasstor (212) zum Ansaugen von Luft aufweist; und
zumindest ein Abschnitt des Lufteinlasstors des anderen Ansaugdurchlasses in dem anderen ausgenommenen Abschnitt (200) angeordnet ist.

13. Das Grätsch-Typ-Fahrzeug gemäß Anspruch 11, bei dem zumindest ein Abschnitt des anderen Ansaugdurchlasses (210) durch einen Blasebalg förmigen Kanal gebildet ist.

14. Das Grätsch-Typ-Fahrzeug gemäß Anspruch 1, bei dem die Motoreinheit (40) durch den Körperrahmen (20) schwingbar getragen wird.

## Revendications

1. Véhicule de type à selle, comprenant:
un châssis de carrosserie (20) présentant un châssis principal (24) s'étendant vers l'arrière et obliquement vers le bas à partir d'un tube de tête (22), des châssis de siège gauche et droit (26, 28) s'étendant, chacun, vers l'arrière et obliquement vers le haut à partir du châssis principal, et un élément transversal (30) monté entre le châssis de siège gauche et droit;
une boîte de rangement (180) présentant une paroi latérale droite positionnée à gauche du châssis de siège droit, la boîte de rangement étant supportée entre les châssis de siège gauche et droit (26, 28) par l'élément transversal (30),
une unité de moteur (40) présentant un carter de vilebrequin (44), un cylindre (46) s'étendant vers l'avant et obliquement vers le haut à partir du carter de vilebrequin, un boîtier de transmission (60) disposé à gauche du carter de vilebrequin, et une transmission variable en continu du type à courroie (62) disposée dans le boîtier de transmission, l'unité de moteur (40) étant supportée au-dessous de la boîte de rangement (180) par le châssis de carrosserie (20);
un tuyau d'admission (54) s'étendant vers l'arrière à partir du cylindre (46) et disposé au-dessus du cylindre et en dessous de la boîte de rangement;
un purificateur d'air (100) connecté à une partie arrière du tuyau d'admission (54); et
un passage d'admission (130) s'étendant vers le haut à partir du purificateur d'air (100) et présentant un orifice d'entrée d'air (122) pour aspirer de l'air,
dans lequel:
le passage d'admission (130) est disposé à droite de la ligne centrale du véhicule;
l'orifice d'entrée d'air (122) du passage d'admission est disposé à droite de la paroi latérale droite de la boîte de rangement (180) et à gauche du châssis de siège droit (28); et
au moins une partie de l'orifice d'entrée d'air (122) du passage d'admission donne en direction de la paroi latérale droite (182) de la boîte de rangement (180).

2. Véhicule du type à selle selon la revendication 1, comprenant par ailleurs un repose-pied de passager (35) supporté sur une partie arrière uniquement du châssis de siège gauche (26) parmi les châssis de siège droit et gauche.

3. Véhicule du type à selle selon la revendication 1, comprenant par ailleurs:
un tuyau d'échappement (56) connecté au cylindre (46) et s'étendant vers l'arrière; et
un silencieux (15) connecté à une partie d'extrémité arrière du tuyau d'échappement et s'étendant vers l'arrière et obliquement vers le haut, et
dans lequel
la ligne centrale du silencieux (15) est positionnée à droite de la ligne centrale du passage d'admission (130), lorsque vue de l'arrière du véhicule.

4. Véhicule du type à selle selon la revendication 3, dans lequel une extrémité la plus à gauche du silencieux (15) est positionnée à droite de la ligne centrale du passage d'admission (130), lorsque vue de l'arrière du véhicule.

5. Véhicule du type à selle selon la revendication 4, dans lequel une extrémité la plus à gauche du silencieux (15) est positionnée à droite de l'extrémité la plus à droite du passage d'admission (130), lorsque vue de l'arrière du véhicule.

6. Véhicule du type à selle selon la revendication 1, dans lequel:
la paroi latérale droite (182) de la boîte de rangement (180) présente une partie en creux (190) en retrait vers la gauche; et
au moins une partie de l'orifice d'entrée d'air (122) du passage d'admission (130) est disposée à l'intérieur de la partie en creux (190).

7. Véhicule du type à selle selon la revendication 6, dans lequel:
la paroi latérale droite (182) de la boîte de rangement (180) présente une paroi latérale avant, une paroi arrière s'étendant vers la gauche depuis l'extrémité arrière de la paroi latérale avant, et une paroi latérale arrière s'étendant vers l'arrière depuis une extrémité la plus à gauche de la paroi arrière;
la partie en creux (190) est définie par au moins la paroi arrière et la paroi latérale arrière; et
au moins une partie de l'orifice d'entrée d'air du passage d'admission fait face à la paroi arrière.

8. Véhicule du type à selle selon la revendication 7, dans lequel:
l'orifice d'entrée d'air (122) du passage d'admission (130) présente une première partie qui donne vers l'avant et une deuxième partie qui donne vers la gauche;
l'orifice d'entrée d'air est disposé de sorte qu'une extrémité la plus à droite de la paroi arrière soit positionnée à droite d'une extrémité la plus à droite de la première partie;
la première partie fait face à la paroi arrière; et
la deuxième partie fait face à la paroi latérale arrière.

9. Véhicule du type à selle selon la revendication 1, dans lequel le passage d'admission (130) est formé par un conduit non contractile et non extensible.

10. Véhicule du type à selle selon la revendication 1, dans lequel au moins une partie de l'orifice d'entrée d'air (122) est disposée de manière à venir en recouvrement avec le châssis de siège droit (28), lorsque vue d'un côté du véhicule.

11. Véhicule du type à selle selon la revendication 1, comprenant par ailleurs un autre passage d'admission (210) disposé à gauche de la ligne centrale du véhicule et s'étendant vers le haut depuis le boîtier de transmission (60).

12. Véhicule du type à selle selon la revendication 11, dans lequel:
la boîte de rangement (180) présente une paroi latérale gauche (192) positionnée à droite du châssis de siège gauche (26);
la paroi latérale gauche présente une autre partie en creux (200) en retrait vers la droite;
l'autre passage d'admission (210) présente un orifice d'entrée d'air (212) pour aspirer de l'air; et
au moins une partie de l'orifice d'entrée d'air de l'autre passage d'admission est disposée dans l'autre partie en creux (200).

13. Véhicule du type à selle selon la revendication 11, dans lequel au moins une partie de l'autre passage d'admission (210) est formée par un canal en forme de soufflet.

14. Véhicule du type à selle selon la revendication 1, dans lequel l'unité de moteur (40) est supportée de manière pivotante par le châssis de carrosserie (20).
